# EUROPEAN PATENT APPLICATION

(11) **EP 3 029 386 A1**
(43) Date of publication of application: **08.06.2016**
(21) Application number: 14196037.7
(22) Date of filing: 03.12.2014
(51) Int. Cl.: F24F 3/14, F24F 5/00

(54) **Cooler**

(71) Applicant: Mecaphor BV, 7007 GE Doetinchem (NL)
(72) Inventor: Meijer, Willem, 7021 DV Zelhem (NL)
(74) Representative: De Vries & Metman

(57) **Abstract**

Cooler (1) comprising a cooling unit (3), e.g., a dew point cooling unit, and a drying unit (5). The cooling unit comprises a cooling channel (11) and an evaporating channel (13) separated from the cooling channel by a heat transfer wall (15). The cooling unit comprises means (10), such as sprayers, for wetting the transfer wall at the side of the evaporating channel. The drying unit (5) comprises a drying channel (17) and a regeneration channel (19) for a regeneration flow. The regeneration channel of the drying unit (5) comprises an outflow opening which is fluidly connected to an inlet of a condenser (9). The condenser comprises an outlet (25) fluidly connected to an inflow opening (27) of the drying channel of the drying unit.

## Description

The present invention relates to a cooler comprising a cooling unit and a drying unit. A coolant, typically air, is circulated between the drying unit and the cooling unit, e.g., via coolant channels of a heat exchanger with heat transfer walls separating the coolant channels from a medium to be cooled, such as ambient air in a building interior or other gases or fluids, such as water.

WO 2012/087139 discloses a system for cooling and drying an air flow. The system comprises a cooling unit and a drying unit. The cooling unit is a dew point cooler having a cooling channel and an evaporating channel separated by a heat transfer wall. The cooling channel is fluidly connected to an inflow opening of the evaporating channel such that part of the air flow coming from the cooling channel is directed via the evaporating channel. The outflow opening of the cooling channel or the outflow opening of the evaporating channel is fluidly connected to an inflow opening of the drying unit. In the drying unit wet air from the cooling unit is dried by a sorption material. The sorption material can be dried by a flow of regeneration air at a temperature above the critical solution temperature of the sorption material. WO 2012/087139 also discloses embodiments with the drying unit and the cooling unit forming a closed circuit with a heat exchanger. In practice the systems according to WO 2012/087139 are substantially larger than other climate control apparatuses and more sensitive for weather conditions, such as in tropical climates with high peaks of relative humidity.

It is an object of the invention to provide a cooling system which combines improved compactness with reduced sensitivity for environmental influences.

The object of the invention is achieved with a cooler with a drying unit having a regeneration channel with an outflow opening fluidly connected to an inlet of a condenser, while the condenser comprises an outlet fluidly connected to an inflow opening of the drying channel of the drying unit.

By integrating a condenser, the circuit can be made more self-contained and closed and better shielded against environmental conditions such as outside relative humidity. The circuit can be made more compact. Higher internal pressures can be used without the need to have special provisions, such as extra strong seals in the drying unit between the regeneration channel and the drying channel. This also makes it possible to use shorter cycle times.

Air is often used as a coolant in dew point coolers, but the use of a closed circuit allows use of other types of coolants, such as other coolant gases or even coolant liquids.

In the evaporating channel a wetting agent is actually absorbed by the coolant rather than being evaporated. Moreover, if the coolant itself is a liquid, such as water, the wetting agent is dissolved instead of evaporated, preferably as closely as possible to the heat transfer wall to maximize heat extraction. In the context of the present disclosure, evaporating channel means any channel for discharging heat extracted from the cooling channel via the heat transfer wall by dissolution of a wetting agent into the passing coolant flow.

The cooling channel and/or evaporating channel of the cooling unit may comprise a plurality of channels. Similarly, the drying channel and/or the regeneration channel of the drying unit may comprise a plurality of channels. The same holds for the channels of the condenser and/or the heat exchanger.

In a specific embodiment the evaporating channel of the cooling unit may have an inflow opening fluidly connected to an outflow opening of the cooling channel. Optionally, the evaporating channel has an outflow opening fluidly connected to an inflow opening of the drying unit. This way, the coolant, usually air, is used as a regeneration fluid for regenerating the sorption material of the drying unit. This makes it possible to build a fully closed recirculation loop including the condenser.

Optionally, the condenser may comprise at least one liquid outlet feeding the wetting means of the cooling unit. This way, also the liquid used with the wetting means of the evaporating channel is recirculated in a loop, for instance a closed loop. If the coolant is air or a similar gas, the wetting liquid is usually water, but particularly in a closed loop other liquids can also be used, such as ammonia, methanol, ethanol or mixtures thereof. Ammonia or methanol can also be used as a "wetting agent" for liquid coolants, such as water.

To cool ambient air - or other gases or fluids - the cooler may comprise at least one heat exchanger with one or more coolant channels with inflow openings fluidly connected to the outflow opening(s) of the cooling channel of the cooling unit. The coolant channels of the heat exchanger may have outflow openings fluidly connected to inflow openings of the drying unit and/or inflow openings of the cooling unit.

The outflow opening of the cooling channel of the cooling unit is fluidly connected to the evaporating channel as well as to the channels of the heat exchanger. For example up to 50 vol.%, e.g., up to 40 vol.%, e.g. 20 - 35 vol.% of the coolant flow leaving the outflow opening of the cooling channel may flow to the evaporating channel whereas the rest flows to the coolant channels of the heat exchanger. Other ratios can also be used if so desired.

The coolant channels of the heat exchanger may, e.g., have outflow openings fluidly connected to an inflow opening of the drying channel of the drying unit.

The drying unit may for example comprise one or more desiccant wheels. Such a desiccant wheel comprises an gas permeable sorption material. In each rotary position the desiccant wheel has one section extending into a drying channel and one section extending into a regeneration channel. As the wheel turns all its sections pass through the drying channel and the regeneration channel. In the drying channel the sorption material picks up moisture (water and/or another wetting liquid) from the passing coolant flow. In the regeneration channel a heating element heats a passing flow of a regeneration fluid. If the temperature is above the critical solution temperature of the sorption material, it will desorb its water content. The passing flow of the regeneration fluid flows through the sorption material and picks up the desorbed water. As a result the wheel section dries before it rotates back into the drying channel.

Usually the rotary speed of a desiccant wheel is about 12 revolutions per hour (rph). In the cooling unit according to the invention faster speeds can be used, e.g., over 100 rph, or over 500 rph or even over 1000 rph.

Other suitable drying units, such as recuperation systems, can also be used, for instance systems having a plurality of channels with a coating of a sorption material, wherein alternately each channel is temporarily used as a regeneration channel.

Suitable sorption materials include for instance LCST (lower critical solution temperature) polymers, for instance selected from the group of polyoxazoline, poly(N-isopropyl acrylamine) and poly(dimethylamino ethyl methacrylate), requiring relatively little heat to regenerate. A further suitable sorption material is the sodium salt of poly acrylic acid, which has a moisture absorbing capacity increasing with the relative humidity of the coolant gas. With such drying means the drying device will be able to absorb more moisture from the coolant gas flow at a higher relative air humidity than at a lower relative humidity. Above a certain level of relative humidity the absorbing capacity of the sodium salt of poly acrylic acid increases substantially exponentially with an increasing relative humidity. To promote the stability of the LCST layer the LCST polymer may for example be cross linked to an effective degree.

If the coolant channels in the various parts of the apparatus form a closed circuit the apparatus may comprise means for adjusting the pressure in the circuit. The pressure can for instance lie between 0.5 bar - 12 bar. The pressure can particularly be between 0.5 - 1 bar or between 1 - 8 bar, e.g., between 1 - 5 bar.

A higher pressure has the advantage that fewer grams of water (or other wetting agent) per kilogram of coolant need to be extracted from the coolant gas to cool it to a desired extent. High pressures also enable to make a very compact design of the apparatus, which may for instance be suitable for use in a car or similar vehicle or other types of small spaces.

A lower pressure on the other hand has the advantage that a lower temperature of the coolant can be achieved at a constant absolute humidity.

The invention also relates to a cooler comprising a cooling unit and a drying unit, the cooling unit being a dew point cooler comprising a cooling channel and an evaporating channel separated from the cooling channel by a heat transfer wall. The drying unit comprises a drying channel and a regeneration channel for a regeneration flow. The evaporating channel of the cooling unit has an outflow opening fluidly connected to an inflow opening of the regeneration channel of the drying unit.

The invention will be further explained with reference to the accompanying drawing.
Figure 1: schematically shows a cooler according to the invention;
Figure 2: shows an HX-diagram for water in air at atmospheric pressure representing the various stages of a coolant gas during circulation in the cooler of Figure 1.

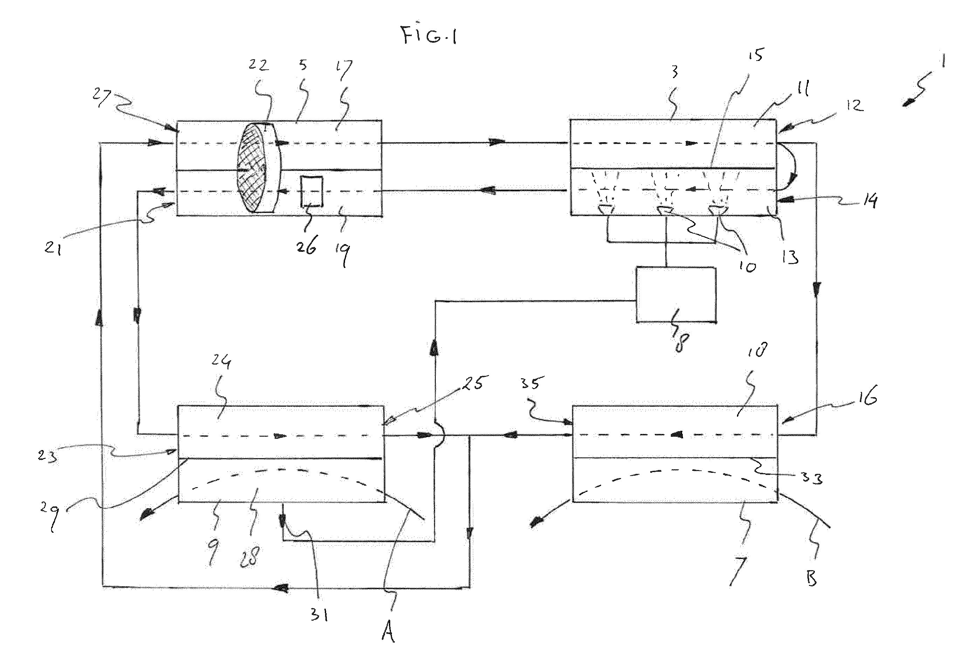

Figure 1 shows schematically a cooler 1 with a cooling unit or dew point cooler 3, a drying unit 5, a heat exchanger 7 and a condenser 9, forming a closed recirculation loop for recirculating a coolant gas, in particular air.

The cooling unit 3 comprises a cooling channel 11 and an evaporating channel 13 separated from the cooling channel 11 by a heat transfer wall 15. The cooling unit 3 further comprises water sprayers 10 for wetting the heat transfer wall 15 at the side of the evaporating channel 13. The cooling channel 11 has an outflow opening 12 fluidly connected to an inflow opening 14 of the evaporating channel 13. The outflow opening 12 of the cooling channel 11 is also fluidly connected to an inflow opening 16 of a coolant gas channel 18 of the heat exchanger 7.

The drying unit 5 comprises a drying channel 17 and a regeneration channel 19 for a regeneration gas flow. A desiccant wheel 22 carries a sorption material, such as the sodium salt of poly acrylic acid. During rotation each section of the desiccant wheel 22 alternately passes the drying channel 17 and the regeneration channel 19.

The regeneration channel 19 of the drying unit 5 comprises an outflow opening 21 which is fluidly connected to an inlet 23 of the condenser 9. The condenser 9 comprises a condenser channel 24 with an outlet 25 fluidly connected to an inflow opening 27 of the drying channel 17 of the drying unit 5. The condenser 9 also comprises a cooling channel 28 for passage of a flow A of outside air. If the cooler 1 is used for air conditioning a car, this flow A can for example be wind generated by driving. This cooling channel 28 is separated from the condensation channel 24 by a heat transfer wall 29. The cooling channel 28 is connected to the open air and does not form part of the closed circuit.

The condenser 9 also comprises a water outlet 31 fluidly connected to the sprayers 10 in the evaporating channel 11, via a buffer reservoir 8. If the sprayers 10 consume more water than delivered by the condenser 9, additional water can be supplied from a second source.

The heat exchanger 7 comprises coolant gas channels 18 separated by a heat transfer wall 33 from a medium to be cooled, such as ambient air in a building, car or similar environment. The coolant gas channels 18 have inflow openings 16 fluidly connected to the outflow opening 12 of the cooling channel 11 of the cooling unit 3. The coolant gas channels 18 have outflow openings 35 fluidly connected to the inflow opening 27 of the drying channel 17 of the drying unit 5. The line connecting the coolant gas channel 18 of the heat exchanger 7 and the drying channel 17 may join the line connecting the condensation channel 24 to the drying channel 17 to partly form a single line.

The circuit includes one or more circulation pumps (not shown) to move coolant gas along the circuit. The coolant gas passes the coolant channel 11 of the cooling unit 3. In the evaporating channel 13 water is sprayed against the heat transfer wall 15. The sprayed water is absorbed by the passing flow of coolant gas. The absorption extracts heat from the transfer wall 15 and the coolant gas flowing through the coolant channel 11.

At the outflow opening 12 of the cooling channel 11 a part-e.g., about 0,3 to 0,5 - of the coolant gas leaving the cooling channel 11 is directed to the evaporating channel 13, while the rest of the flow is directed to the heat exchanger 7. In the heat exchanger 7 the cooled gas from the cooling unit 3 flows through the coolant gas channels 18, extracting heat from the heat transfer wall 33 and from ambient air at the other side of the heat transfer wall 33. The used coolant gas leaves the heat exchanger 7 and is transferred to the drying channel 17 of the drying unit 5 together with coolant gas leaving the condenser 9. A mix of coolant gas form the heat exchanger 7 and coolant gas from the condenser 9 enters the drying channel 17 where it passes the section desiccant wheel 22 crossing the drying channel 17. The dried coolant gas is subsequently fed to the cooling channel 11 of the cooling unit 3 to repeat the loop.

The part of the coolant gas flow which is directed via the evaporating channel 13 has a high humidity level and is passed as a regeneration gas to the regeneration channel 19 of the drying unit. The coolant gas is heated by one or more heating elements 26 to lower its relative humidity and to heat up the sorption material to a temperature above its critical solution temperature. The sorption material desorbs water which is absorbed by the passing coolant flow.

The wet coolant gas subsequently flows via the condensation channel 24 of the condenser 9 where at least part of the water condenses onto the heat transfer wall 29 cooled by passing outside air in the cooling channel 28. The condensed water is collected and returned to the sprayers 10 of the evaporating channel 13. The coolant gas leaving the condenser 9 is then returned to the drying channel 17 of the drying unit 5.

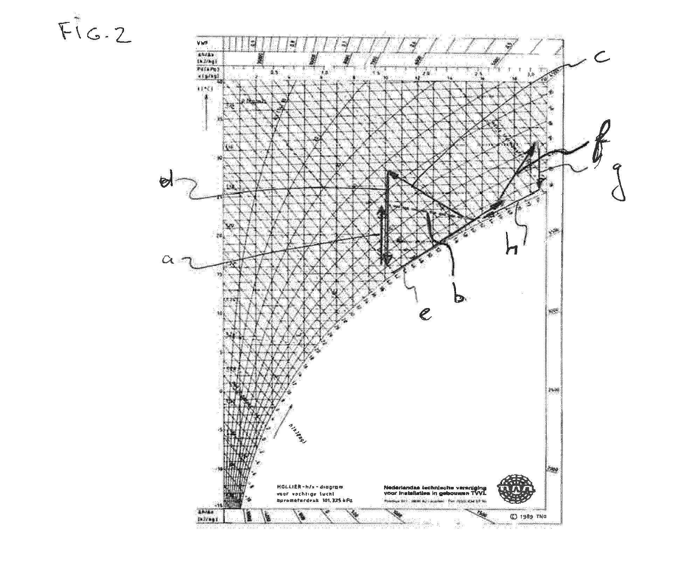

Figure 2 shows an HX or Mollier diagram for water in air at atmospheric pressure with arrows a - f representing the various steps passed by the coolant gas flowing through the circuit of the cooler 1.

Arrow a represents passage of the coolant gas through the coolant gas channel 18 of the heat exchanger 7. Here the temperature of the coolant gas increases from 15°C to 24°C.

When the coolant gas leaves the heat exchanger 7 it is mixed with coolant gas leaving the condenser 9. This is indicated with dotted line b. The mixture will have a temperature and a water content at a point on the dotted line b, where arrow c starts.

Arrow c represents the passage through the drying channel 17 of the drying unit 5. Relative humidity, water content and enthalpy are lowered, while the temperature rises.

The coolant gas is subsequently passed through the cooling channel of the cooling unit 3. This is represented by arrow d, showing a decrease of the temperature with about 13°C, while the water content remains constant. Although the water content does not change the relative humidity increases with the decrease of temperature, in this particular example to close to RH = 100 %.

Arrow e represents the flow of coolant gas through the evaporating channel 13 of the cooling unit 3. Temperature rises with a constant relative humidity close to 100 % so the water content increases. This arrow e ends at a distance below the starting point of arrow d. A smaller distance between these two points corresponds to a better heat transfer via the heat transfer wall 15 of the cooling unit 3.

Arrow f represents passage through the regeneration channel 19, where the coolant gas is heated to take up the moisture from the desiccant wheel 22. Water content of the coolant gas increases, but relative humidity lowers as the temperature rises.

In the condenser 9 the temperature is lowered so the relative humidity increases (arrow g) until it approaches a value of RH = 100%. Then the moisture condenses and water content in the gas is reduced (arrow h) until the starting point of the dotted line b, where the dehumidified coolant gas is mixed with coolant gas from the heat exchanger 7.

## Claims

1. Cooler (1) comprising a cooling unit (3) and a drying unit (5), wherein the cooling unit comprises a cooling channel (11) and an evaporating channel (13) separated from the cooling channel by a heat transfer wall (15), the cooling unit further comprising means (10) for wetting the transfer wall at the side of the evaporating channel;
wherein the drying unit comprises a drying channel (17) and a regeneration channel (19) for a regeneration flow;
**characterized in that** the regeneration channel of the drying unit comprises an outflow opening which is fluidly connected to an inlet of a condenser (9), and wherein the condenser comprises an outlet (25) fluidly connected to an inflow opening (27) of the drying channel of the drying unit.

2. Cooler according to any preceding claim, the evaporating channel (13) of the cooling unit (3) having an inflow opening fluidly connected to an outflow opening of the cooling channel (11).

3. Cooler according to claim 1 or 2, wherein the evaporating channel (13) has an outflow opening fluidly connected to an inflow opening of the regeneration channel of the drying unit.

4. Cooler according to claim 1, 2, or 3, wherein the condenser (9) comprises at least one liquid outlet feeding the wetting means of the cooling unit (3).

5. Cooler according to any preceding claim, comprising at least one heat exchanger (7) with one or more coolant channels with inflow openings fluidly connected to outflow openings of the cooling channel of the cooling unit (3).

6. Cooler according to claim 5, wherein the coolant gas channels of the heat exchanger (7) have outflow openings fluidly connected to an inflow opening of the drying channel of the drying unit (5).

7. Cooler according to any one of the preceding claims, wherein the drying unit (5) comprises a desiccant wheel (22).

8. Cooler according to claim 7 wherein the desiccant wheel carries a LCST polymer, for instance selected from the group of polyoxazoline, poly(N-isopropyl acrylamine), poly(dimethylamino ethyl methacrylate) and the sodium salt of poly acrylic acid.

9. Cooler according to any preceding claim containing a coolant under a pressure exceeding atmospheric pressure.
